# FASCICULE DE BREVET EUROPEEN

(11) **EP 3 087 347 B1**
(45) Date de publication et mention de la délivrance du brevet: **22.05.2019**
(21) Numéro de dépôt: 14831016.2
(22) Date de dépôt: 23.12.2014
(51) Int. Cl.: G01D 4/00, H04Q 9/00, H04Q 9/02, G06F 8/60, G06F 8/65, H04L 12/24

(54) **TELEDISTRIBUTION D'UNE MISE A JOUR LOGICIELLE A DES TERMINAUX DE TELE-RELEVE**
FERNDISTRIBUTION EINES SOFTWARE-UPDATES AN ENTFERNTE LESEENDGERÄTE
REMOTE-DISTRIBUTION OF A SOFTWARE UPDATE TO REMOTE-READING TERMINALS

(30) Priorité: 26.12.2013 FR 1363579
(43) Date de publication de la demande: 02.11.2016
(73) Titulaire: GRDF, 75009 Paris (FR)
(72) Inventeur: MILLE, Michaël, F-28410 Bû (FR); LACOSTE, Robert, F-92370 Chaville (FR); VIALLE, Alexandre, F-75015 Paris (FR)
(74) Mandataire: Fédit-Loriot
(86) Numéro de dépôt international: PCT/FR2014/053534
(87) Numéro de publication internationale: WO 2015/097406

(56) Documents cités:
- EP-A1- 2 661 050
- EP-A1- 2 663 089
- WO-A1-2005/015890
- US-A1- 2008 259 844
- US-A1- 2012 078 547

## Description

La présente invention se rapporte à la gestion des mises à jour dans une installation de télé-relève. Elle concerne plus particulièrement un procédé de gestion de la mise à jour logicielle de terminaux de télé-relève d'une installation de télé-relève.

Une installation de télé-relève comprend classiquement plusieurs terminaux de télé-relève, par exemple des compteurs intelligents d'eau ou de gaz, pouvant effectuer un comptage de consommation mais aussi transmettre des informations issues de différents relevés (température, pollution, etc.). Les données transmises par les terminaux de télé-relève, transitent via des points d'accès, généralement par liaison radiofréquence. Ces points d'accès, permettent ensuite la remontée de l'information au niveau d'un serveur de gestion de l'installation de télé-relève, auquel ils sont reliés par l'intermédiaire d'un réseau de télécommunication, par exemple un réseau filaire ou sans fil, de type GPRS ou autre.

Les terminaux de télé-relève sont installés sur les réseaux d'eau, de gaz ou sur tout autre réseau nécessitant un comptage et des mesures, la plupart du temps pour une longue durée, généralement de l'ordre de la dizaine d'années. Pour assurer leur fonctionnement permanent, même lors de l'absence de courant électrique, ces terminaux de télé-relève fonctionnent avec des accumulateurs électriques. Aussi, une problématique importante est la limitation de leur consommation électrique.

Pour mettre à jour les logiciels embarqués dans ces terminaux de télé-relève, il est connu de procéder à distance, en transmettant, via les points d'accès, les données de mise à jour. Cependant, les moyens de communication radiofréquence incorporés dans les terminaux de télé-relève étant relativement consommateur en énergie électrique, il est nécessaire de planifier la transmission de ces données de mise à jour.

Aussi, nous connaissons, du document de brevet EP2661050, un procédé de mise à jour de terminaux de télé-relève tous associés à un même point d'accès (« data collector » en anglais), qui transmet une annonce de mise à jour aux terminaux, indiquant à quel moment les données de mise à jour seront transmises par le point d'accès. Ainsi les terminaux activent leurs moyens de communication radiofréquence uniquement à l'instant indiqué dans l'annonce.

Dans une installation de télé-relève, comprenant une pluralité de terminaux de télé-relève, et une pluralité de points d'accès, les mises à jour sont généralement transmises en même temps par tous les points d'accès, ce qui crée un fort encombrement du spectre radio et augmente le risque de mauvaise réception des données de mise à jour par les terminaux de télé-relève.

Dans les espaces de grande concentration de terminaux de télé-relève, par exemple dans les grandes villes, ce risque est significativement augmenté, du fait de la superposition possible de plusieurs émissions quasi-simultanées sur des mêmes bandes fréquences.

On connait du document EP2661050, une solution consistant à décaler dans le temps l'envoi des mises à jour par les points d'accès susceptibles d'interférer les uns avec les autres. Cependant, une telle solution produit un encombrement plus long des fréquences radios utilisées. En outre, une telle solution impose la gestion de plusieurs instants d'émission des mises à jour, ce qui tend à complexifier le déploiement technique de la mise à jour.

US2008/259844, WO2005/015890, EP2663089 et US2012/078547 décrivent d'autres exemples de procédés et d'installations de télé-relève.

Aussi, il existe un besoin pour optimiser la gestion des mises à jour dans une installation de télé-relève.

En particulier, il existe un besoin d'une solution alternative pour limiter les problèmes d'interférence lors de l'envoi d'une mise à jour par une pluralité de points d'accès.

Dans le but de résoudre ce problème, la présente invention propose un procédé selon la revendication 1 de gestion d'une mise à jour logicielle d'une pluralité de terminaux de télé-relève à mettre à jour dans une installation de télé-relève comprenant une pluralité de points d'accès, la pluralité de points d'accès étant adaptée pour communiquer par liaison radiofréquence avec la pluralité de terminaux de télé-relève à mettre à jour, et étant adaptée pour communiquer avec un serveur de gestion de l'installation de télé-relève par l'intermédiaire d'un réseau de télécommunication, chaque terminal de télé-relève de la pluralité de terminaux de télé-relève à mettre à jour étant associé à un point d'accès de la pluralité de points d'accès pour transmettre des données de télé-relève au serveur de gestion, le procédé étant caractérisé en ce qu'il comprend des étapes de :
(a) transmission d'un message de planification de réception de données de mise à jour à la pluralité de terminaux de télé-relève à mettre à jour par l'intermédiaire de leurs points d'accès associés, le message de planification comprenant un instant de début de diffusion des données de mise à jour ;
(b) sélection d'un ensemble de points d'accès parmi la pluralité de points d'accès de manière à limiter le nombre de points d'accès utilisés pour diffuser les données de mise à jour, tout en permettant la réception des données de mise à jour par la pluralité de terminaux de télé-relève à mettre à jour ;
(c) émission des données de mise à jour par l'ensemble de points d'accès sélectionné, à l'instant de début de diffusion,
l'étape (b) de sélection comprend la sélection du plus petit nombre de point d'accès permettant d'émettre des mises à jour simultanément, en tenant compte d'une part, des zones de portée d'émission des points d'accès et, d'autre part, des emplacements des terminaux de télé-relève relativement à ces zones de portée d'émission, de telle sorte que les zones de portée d'émission des points d'accès dudit plus petit nombre de points d'accès sélectionnés couvrent et atteignent l'ensemble des terminaux à mettre à jour.

Les terminaux de télé-relève de la pluralité de terminaux de télé-relève peuvent être, de manière non limitative, des compteurs d'eau, des compteurs de gaz, des compteurs d'électricité, mais aussi des dispositifs de surveillance de capteurs, par exemple pour surveiller des capteurs de débits de pression, de température, d'humidité, de niveaux, de vitesse, des capteurs acoustiques, des capteurs de conductivité, de turbidité, de mesure de pH, de taux H2S. Ces terminaux de télé-relève peuvent aussi être, de manière non limitative, des dispositifs de surveillance de capteurs dans l'habitat et les activités tertiaires, par exemple de surveillance de capteurs de détection d'intrusion, de fumée, de monoxyde de carbone.

Ces terminaux de télé-relève peuvent aussi, de manière non limitative, comprendre ou être des dispositifs permettant de piloter des actionneurs, par exemple pour fermer des vannes en cas de détection de fuites.

Avantageusement la sélection opérée à l'étape (b), de l'ensemble de points d'accès de diffusion, permet de réduire l'encombrement du spectre radio lors de la transmission des données de mise à jour, ce qui permet aussi la réduction du risque de mauvaise réception de données de mise à jour par les terminaux de télé-relève.

En particulier, l'étape (b) de sélection comprend la transmission d'un message de notification de la sélection à chaque point d'accès de l'ensemble de points d'accès sélectionné, le message de notification comprenant l'instant de début de diffusion.

Avantageusement, lors de l'étape (a) de transmission du message de planification de réception des données de mise à jour, chaque terminal de la pluralité de terminaux de télé-relève à mettre à jour émet un message d'acquittement à destination de son point d'accès associé, pour confirmer la planification de la réception des données de mise à jour à l'instant de début de diffusion.

En particulier, l'étape (c) d'émission des données de mise à jour par l'ensemble de points d'accès sélectionné est effectuée plusieurs fois consécutives.

De manière avantageuse, l'étape (a) de transmission du message de planification de réception des données de mise à jour est effectuée, pour chaque terminal de télé-relève de la pluralité de terminaux de télé-relève (T₁-T₉) à mettre à jour, consécutivement à la réception, par son point d'accès associé, de données de télé-relève émises par le terminal de télé-relève.

La présente invention propose, en outre, une installation de télé-relève selon la revendication 6 comprenant :
- Un serveur de gestion ;
- Une pluralité de terminaux de télé-relève à mettre à jour ;
- Une pluralité de points d'accès ;
la pluralité de points d'accès étant adaptée pour communiquer par liaison radiofréquence avec la pluralité de terminaux de télé-relève à mettre à jour, et étant adaptée pour communiquer avec le serveur de gestion de l'installation de télé-relève par l'intermédiaire d'un réseau de télécommunication, chaque terminal de télé-relève de la pluralité de terminaux de télé-relève à mettre à jour étant associé à un point d'accès de la pluralité de points d'accès pour transmettre des données de télé-relève au serveur de gestion,
l'installation de télé-relève étant caractérisée en ce que :
le serveur de gestion est adapté pour commander la transmission d'un message de planification de réception de données de mise à jour à la pluralité de terminaux de télé-relève à mettre à jour, par l'intermédiaire de leurs points d'accès associés, le message de planification comprenant un instant de début de diffusion des données de mise à jour;
le serveur de gestion étant adapté pour sélectionner un ensemble de points d'accès parmi la pluralité de points d'accès de manière à limiter le nombre de points d'accès utilisés pour diffuser les données de mise à jour, tout en permettant la réception des données de mise à jour par la pluralité de terminaux de télé-relève à mettre à jour ;
l'ensemble de points d'accès sélectionné par le serveur de gestion étant adapté pour émettre les données de mise à jour à l'instant de début de diffusion,
ladite sélection dudit ensemble de points d'accès comprenant la sélection du plus petit nombre de point d'accès permettant d'émettre des mises à jour simultanément, en tenant compte d'une part, des zones de portée d'émission des points d'accès et, d'autre part, des emplacements des terminaux de télé-relève relativement à ces zones de portée d'émission, de telle sorte que les zones de portée d'émission des points d'accès dudit plus petit nombre de points d'accès sélectionnés couvrent et atteignent l'ensemble des terminaux à mettre à jour.

D'autres particularités et avantages de l'invention ressortiront à la lecture de la description faite ci-après de deux modes de réalisation particuliers de l'invention, donnés à titre indicatif mais non limitatif, en référence aux dessins annexés sur lesquels :
- la figure 1 représente un exemple d'installation de télé-relève selon un premier mode de réalisation de l'invention ;
- la figure 2 représente un exemple d'installation de télé-relève selon un deuxième mode de réalisation de l'invention ;

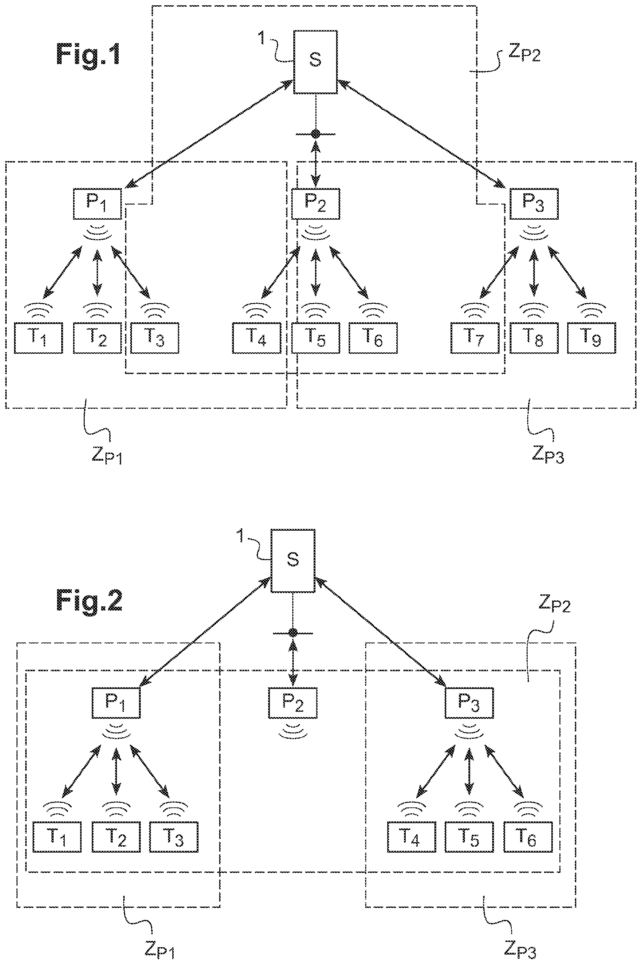

En référence à la figure 1, une installation de télé-relève comprend un serveur 1 de gestion de l'installation de télé-relève.

Ce serveur de gestion 1 communique via un réseau de télécommunication avec 3 points d'accès P₁, P₂, P₃ de l'installation. Le serveur de gestion 1, comprend par exemple, une carte réseau pour communiquer avec les points d'accès P₁ à P₃, un microprocesseur et une mémoire interne.

Ces points d'accès P₁ à P₃ comprennent par exemple, une carte d'émission-réception radiofréquence et une antenne radio pour communiquer avec des terminaux de télé-relève T₁ à T₉ de l'installation, une carte réseau pour communiquer via le réseau de télécommunication avec le serveur de gestion 1, un micro-processeur et une mémoire interne.

L'installation de télé-relève comprend en outre une pluralité de terminaux de télé-relève T₁ à T₉, dans cet exemple de réalisation 9 terminaux de télé-relève T₁ à T₉. Ces terminaux de télé-relève T₁ à T₉ sont, par exemple, des terminaux de comptage de la consommation de gaz, installés dans des circuits d'arrivée de gaz de logements individuels. Les terminaux de télé-relève T₁ à T₉ comprennent, par exemple, une pile électrique, un micro-processeur, une mémoire interne, des moyens de communication radiofréquence et des moyens de comptage de la consommation de gaz. Les terminaux de télé-relève T₁ à T₉ communiquent, via leurs moyens de communication radiofréquence, avec les points d'accès P₁ à P₃ par une liaison radiofréquence. Les moyens de communication radiofréquence des terminaux de télé-relève T₁ à T₉ sont, d'un point de vue général, éteints en dehors des périodes d'émission de données de télé-relève, pour économiser la pile électrique. Aussi il n'est pas possible aux points d'accès P₁ à P₃ de transmettre des données aux terminaux de télé-relève T₁ à T₉, lorsque ceux-ci ont éteint leurs moyens de communication radiofréquence.

Du fait des limites de portée d'émission des moyens de communication radiofréquence des terminaux de télé-relève T₁ à T₉ et des limites de portée d'émission des moyens de communication radiofréquence des points d'accès P₁ à P₃, chaque terminal de télé-relève T₁ à T₉ de l'installation de télé-relève est associé à un point d'accès P₁ à P₃, dit point d'accès associé. L'ensemble des terminaux de télé-relève T₁ à T₉ associés à un même point d'accès P₁ à P₃ forment un groupe de terminaux de télé-relève.

L'association d'un terminal de télé-relève T₁ à T₉ à un point d'accès P₁ à P₃ peut être effectuée lors de l'initialisation du terminal de télé-relève T₁ à T₉.

Préférentiellement, l'association peut être effectuée par l'élection, par le serveur de gestion 1, du point d'accès P₁ à P₃ recevant le mieux le signal du terminal de télé-relève T₁ à T₉ en cours d'initialisation. A cette fin, les points d'accès P₁ à P₃, transmettent au serveur de gestion 1 un message d'information dès qu'ils captent le signal d'un nouveau terminal de télé-relève T₁ à T₉. Ce message comprend le niveau de réception du signal du terminal de télé-relève T₁ à T₉ en cours d'initialisation. Aussi, à l'issue d'une courte période d'attente, de l'ordre de quelques secondes, le serveur de gestion 1 élit le point d'accès recevant le mieux les signaux du terminal de télé-relève T₁ à T₉ en cours d'initialisation, et transmet alors au point d'accès P₁ à P₃ élu, un message d'association. Le message d'association informe le point d'accès P₁ à P₃ élu, que le terminal de télé-relève T₁ à T₉ en cours d'initialisation rejoint le groupe de terminaux de télé-relève qui lui sont associés. Ce message d'association est immédiatement relayé par le point d'accès P₁ à P₃ élu au terminal de télé-relève T₁ à T₉ en cours d'initialisation. Aussi, le serveur de gestion 1, stocke dans sa mémoire, l'association entre le terminal de télé-relève T₁ à T₉ et son point d'accès P₁ à P₃ associé, et stocke, en outre, la liste des points d'accès P₁ à P₃ ayant informé de la réception du signal du terminal de télé-relève T₁ à T₉ en cours d'initialisation.

Le serveur de gestion 1 peut, à l'issue de cette phase d'initialisation, définir des zones de portée d'émission Z_{P1} à Z_{P3} des points d'accès P₁ à P₃.

Dans ce mode de réalisation, un premier groupe T₁ à T₃ de terminaux de télé-relève est associé par le serveur de gestion 1 au premier point d'accès P₁, du fait de leur présence dans la zone de portée d'émission Z_{P1} du point d'accès P₁. Cette association permet au premier groupe de terminaux de télé-relève T₁ à T₃ de communiquer par liaison radiofréquence avec leur point d'accès associé P₁, pour transmettre des données de télé-relève, qui peuvent être des données de mesure et/ou des données de comptage, par exemple de la consommation de gaz. Ces données de mesures et de comptage sont ensuite transmises par le point d'accès associé P₁ au serveur de gestion 1 de l'installation de télé-relève. Cette association est effectuée pour chaque terminal de télé-relève de manière exclusive ; aussi un terminal de télé-relève T₁ à T₉ transmet toujours ses informations au même point d'accès P₁ à P₃ associé. Néanmoins un terminal de télé-relève peut recevoir des données d'un autre point d'accès P₁ à P₃ de l'installation de télé-relève. Un point d'accès P₁ à P₃ communique avec une pluralité de terminaux de télé-relève T₁ à T₉, en fonction des instructions transmises par le serveur de gestion 1, et de manière non exclusive quant au choix des terminaux de télé-relève T₁ à T₉ communicants.

De manière similaire un deuxième groupe T₄ à T₆ de terminaux de télé-relève est associé à un deuxième point d'accès P₂ ayant une zone de portée d'émission Z_{P2}, et un troisième groupe T₇ à T₉ de terminaux de télé-relève est associé à un troisième point d'accès P₃ ayant une zone de portée d'émission Z_{P3}.

Le terminal de télé-relève T₄ est compris dans la zone de portée d'émission Z_{P1} du point d'accès P₁ et dans la zone de portée d'émission Z_{P2} du point d'accès P₂. Cependant il est associé au point d'accès P₂, conformément à ce qui est explicité précédemment pour l'élection du point d'accès associé lors de l'initialisation du terminal de télé-relève T₄.

Similairement, les terminaux de télé-relève T₅ et T₆ sont compris dans la zone de portée d'émission Z_{P2} du point d'accès P₂ et dans la zone de portée d'émission Z_{P3} du point d'accès P₃. Cependant, ils sont associés au point d'accès P₂, conformément à ce qui est explicité précédemment pour l'élection du point d'accès associé lors de l'initialisation du terminal de télé-relève T₄.

Le serveur de gestion 1 reçoit des données de mises à jour pour des terminaux de télé-relève, fournies par le fabricant des terminaux de télé-relève à mettre à jour. Le serveur de gestion 1 détermine à quels terminaux de télé-relève T₁ à T₉ ces données de mise à jour sont destinées. Pour ce faire, le serveur de gestion 1 possède dans sa mémoire interne des informations relative à chaque terminal de télé-relève T₁ à T₉ de l'installation de télé-relève. En particulier, le serveur de gestion 1 stocke pour chaque terminal de télé-relève T₁ à T₉, le fabricant du terminal, le modèle et la version courante du logiciel interne, aussi nommé micrologiciel ou « firmware » en anglais. Ces données vont permettre au serveur de gestion 1 de recenser la liste des terminaux de télé-relève T₁ à T₉, concernés par la mise à jour. Dans cet exemple de réalisation, l'ensemble des terminaux de télé-relève T₁ à T₉ est concerné par la mise à jour logicielle ; on parle alors de terminaux de télé-relève T₁ à T₉ à mettre à jour. Il est évident pour l'homme du métier, de réduire la liste des terminaux de l'installation à une liste de terminaux uniquement concerné par la mise à jour, par exemple, en ignorant les éventuels terminaux de télé-relève T₁ à T₉ non concernés par la mise à jour.

Le serveur de gestion 1 va alors établir la liste des points d'accès P₁ à P₃ associés aux terminaux de télé-relève T₁ à T₉ à mettre à jour. Dans cet exemple la liste des points d'accès associés aux terminaux de télé-relève T₁ à T₉ correspond à l'ensemble des points d'accès P₁ à P₃ de l'installation.

Le serveur de gestion 1 va ensuite transmettre un message à tous les points d'accès P₁ à P₃ associés aux terminaux de télé-relève T₁ à T₉ à mettre à jour. Ce message commande aux point d'accès P₁ à P₃ associés de transmettre un message de planification de réception de données de mise à jour aux terminaux de télé-relève T₁ à T₉ à mettre à jour, ce message comprenant un instant prédéterminé de début de diffusion des données de mise à jour. L'instant de début de diffusion des données de mise à jour peut être encapsulé dans le message de planification comme une valeur d'horodatage, aussi nommé « timestamp » en anglais. Cet instant prédéterminé indique au terminal de télé-relève à quel moment il doit allumer ses moyens de communication radiofréquence, pour recevoir les données de mise à jour.

Pour que le système fonctionne de manière cohérente, le serveur de gestion 1, veille à ce que les points d'accès P₁ à P₃ et les terminaux de télé-relève T₁ à T₉ de l'installation soient synchronisés sur un même horaire, ce qui est une chose bien connue de l'homme du métier.

Du fait de l'extinction des moyens de communication radiofréquence des terminaux de télé-relève T₁ à T₉, en dehors des instants où ils doivent transmettre leurs données de télé-relève, il n'est pas possible, pour les points d'accès P₁ à P₃, de transmettre immédiatement le message de planification de réception de données de mise à jour aux terminaux de télé-relève T₁ à T₉ à mettre à jour.

Aussi, les points d'accès P₁ à P₃, attendent de recevoir des données de télé-relève venant d'un terminal de télé-relève T₁ à T₉, pour lui transmettre le message de planification, si ce terminal est concerné par la mise à jour. En effet, les terminaux de télé-relève T₁ à T₉ gardent leurs moyens de communication radiofréquence allumés pendant une courte période suivant une émission de données de télé-relève, dans le but de recevoir un message provenant d'un point d'accès P₁ à P₃. Avantageusement, cette courte période d'attente d'un message peut aller de 1 seconde à 60 secondes. A l'issue de cette courte période d'attente, les terminaux de télé-relève T₁ à T₉, éteignent leurs moyens de communication radiofréquence, jusqu'à la prochaine transmission de données de télé-relève.

Lorsqu'un terminal de télé-relève T₁ à T₉ à mettre à jour, transmet des données de télé-relève à son point d'accès P₁ à P₃ associé, ce dernier lui transmet, à l'issu de la réception des données de télé-relève, le message de planification initialement transmis par le serveur de gestion 1, en profitant ainsi de la courte période d'attente suivant l'émission des données de télé-relève, où les moyens de communication radiofréquence du terminal de télé-relève T₁ à T₉ demeurent actifs.

Le terminal de télé-relève T₁ à T₉ émet ensuite un message d'acquittement à destination de son point d'accès P₁ à P₃ associé, pour confirmer la prise en compte du message de planification et pour confirmer l'attente, à l'instant de début de diffusion, de la réception des données de mise à jour. Autrement dit le message d'acquittement confirme la planification de la réception des données de mise à jour à l'instant de début de diffusion.

Le point d'accès P₁ à P₃, transmet ensuite un message au serveur de gestion 1 pour indiquer que le message de planification a bien été transmis au terminal de télé-relève T₁ à T₉.

Le serveur de gestion 1, procède ensuite à la sélection d'un ensemble de points d'accès, dits points d'accès de diffusion, parmi la pluralité de points d'accès P₁ à P₃. Par ensemble on entend au moins un point d'accès P₁ à P₃ Les points d'accès de diffusion sélectionnés seront utilisés pour transmettre les données de mise à jour audit instant prédéterminé de début de diffusion des données de mise à jour. Le serveur va sélectionner ces points d'accès de diffusion parmi la pluralité de points d'accès P₁ à P₃ de l'installation, en fonction des terminaux de télé-relève T₁ à T₉ à mettre à jour, et en fonction des zones de portée d'émission des point d'accès P₁ à P₃. Selon l'invention, le serveur de gestion 1, sélectionne le plus petit nombre de point d'accès parmi la pluralité de points d'accès P₁ à P₃ permettant d'émettre les mises à jour à tous les terminaux de télé-relève T₁ à T₉ à mettre à jour. Autrement dit, on sélectionne l'ensemble constitué du nombre minimal de points d'accès propres à diffuser simultanément les mises à jour sur tous les terminaux de télé-relève à mettre en jour, tenant compte d'une part, des zones de portée d'émission des points d'accès et, d'autre part, des emplacements des terminaux de télé-relève relativement à ces zones de portée d'émission.

Dans cet exemple de réalisation, les points d'accès de diffusion sélectionnés pour diffuser les données de mise à jour, correspondent aux deux points d'accès P₁ et P₃, en excluant le point d'accès P₂, car les zones de portée d'émissions Z_{P1} et Z_{P3}, respectivement associées aux points d'accès P₁ et P₃, permettent de couvrir et d'atteindre l'ensemble des terminaux de télé-relève T₁ à T₉ à mettre à jour. Cette sélection permet de limiter le nombre de point d'accès P₁ à P₃ de diffusion utilisés pour transmettre simultanément les données de mise à jour. Ce qui permet, avantageusement, de réduire l'encombrement du spectre radio lors de la transmission des données de mise à jour.

Les points d'accès de diffusion P₁ et P₃, reçoivent alors du serveur de gestion 1, un message de notification les informant qu'ils ont été sélectionnés en tant que points d'accès de diffusion utilisés pour diffuser les données de mise à jour. Le message de notification comprend l'instant de début de diffusion des données de mise à jour, sous forme d'horodatage. Ensuite le serveur de gestion 1 transmet les données de mise à jour aux point d'accès sélectionnés P₁ et P₃, pour qu'ils puissent, à l'instant de début de diffusion prédéterminé, transmettre à leur tour, les données de mise à jour aux terminaux de télé-relève T₁ à T₉ à mettre à jour.

Pour garantir une bonne réception de ces données, les points d'accès de diffusion P₁ et P₃ sélectionnés transmettent plusieurs fois consécutives les données de mise à jour aux terminaux de télé-relève T₁ à T₉ à mettre à jour. Avantageusement la transmission est effectuée 5 fois consécutives. Ceci permet de corriger les données de mise à jour ayant pu être corrompues lors des transmissions radiofréquence.

Une fois les données de mise à jour reçues, chaque terminal de télé-relève T₁ à T₉ à mettre à jour, ayant reçu les mises à jour, éteint ses moyens de communication radiofréquence, vérifie l'intégrité des données de mise à jour reçues et procède à leur écriture en mémoire interne.

Dans un deuxième exemple de réalisation, en référence à la figure 2, l'installation de télé-relève comprend six terminaux de télé-relève T₁ à T₆ à mettre à jour et trois points d'accès P₁ à P₃. Un premier groupe de terminaux de télé-relève T₁ à T₃ est associé, de manière équivalente à ce qui a été effectué dans l'exemple de réalisation en référence à le figure 2, au premier point d'accès P₁, du fait de leur présence dans la zone de portée d'émission Z_{P1} du point d'accès P₁. Cette association permet au premier groupe T₁ à T₃ de communiquer par liaison radiofréquence avec leur point d'accès associé P₁, pour transmettre des données de télé-relève. Un second groupe de terminaux de télé-relève T₄ à T₆ est associé à un second point d'accès P₃. Aussi, selon cet exemple de réalisation, un point d'accès P₂ de l'installation n'est associé à aucun terminal de télé-relève T₁ à T₆ de l'installation, malgré que les terminaux de télé-relève T₁ à T₆ soient compris dans sa zone de portée d'émission Z_{P2}. Néanmoins le serveur de gestion 1 sélectionne, lors de la sélection des points d'accès servant à la diffusion des données de mise à jour, le point d'accès P₂ qui n'est associé à aucun terminal de télé-relève T₁ à T₆, pour transmettre les données de mise à jour. En effet, du fait que l'ensemble des terminaux de télé-relève T₁ à T₆ sont compris dans la zone de portée d'émissions Z_{P2} du terminal P₂, l'encombrement du spectre radio est avantageusement réduit lors de l'émission des données de mise à jour, puisque les données de mise à jour peuvent être transmises simultanément à l'ensemble des terminaux de télé-relève T₁ à T₆ à mettre à jour, en sélectionnant un nombre limité de points d'accès, en l'occurrence un seul point d'accès P₂.

Il apparait, dans cet exemple de réalisation, qu'un point d'accès de diffusion P₂ peut être un point d'accès n'étant associé à aucun terminal T₁ à T₆ de l'installation. Il apparait, en outre, qu'un point d'accès associé P₁ ou P₃ à des terminaux de télé-relève T₄ à T₆ à mettre à jour peut ne pas être sélectionné en tant que point d'accès de diffusion pour diffuser les données de mise à jour.

## Revendications

1. Procédé de gestion d'une mise à jour logicielle d'une pluralité de terminaux de télé-relève (T₁-T₉) à mettre à jour dans une installation de télé-relève comprenant une pluralité de points d'accès (P₁-P₃), ladite pluralité de points d'accès (P₁-P₃) étant adaptée pour communiquer par liaison radiofréquence avec ladite pluralité de terminaux de télé-relève (T₁-T₉) à mettre à jour, et étant adaptée pour communiquer avec un serveur de gestion (1) de ladite installation de télé-relève par l'intermédiaire d'un réseau de télécommunication, chaque terminal de télé-relève (T₁-T₉) de ladite pluralité de terminaux de télé-relève (T₁-T₉) à mettre à jour étant associé à un point d'accès de ladite pluralité de points d'accès (P₁-P₃) pour transmettre des données de télé-relève audit serveur de gestion (1), le procédé comprenant les étapes de :
(a) transmission d'un message de planification de réception de données de mise à jour à ladite pluralité de terminaux de télé-relève (T₁-T₉) à mettre à jour par l'intermédiaire de leurs points d'accès associés, ledit message de planification comprenant un instant de début de diffusion desdites données de mise à jour ;
(b) sélection d'un ensemble de points d'accès parmi ladite pluralité de points d'accès (P₁-P₃) de manière à limiter le nombre de points d'accès utilisés pour diffuser lesdites données de mise à jour, tout en permettant la réception desdites données de mise à jour par ladite pluralité de terminaux de télé-relève (T₁-T₉) à mettre à jour ;
(c) émission desdites données de mise à jour par ledit ensemble de points d'accès sélectionné, audit instant de début de diffusion ;
le procédé étant **caractérisé en ce que** l'étape (b) de sélection comprenant la sélection du plus petit nombre de points d'accès permettant d'émettre les mises à jour à tous les terminaux de télé-relève (T₁-T₉) à mettre à jour simultanément, en tenant compte d'une part, des zones de portée d'émission (ZP1, ZP2, ZP3) des points d'accès (P₁-P₃) et, d'autre part, des emplacements des terminaux de télé-relève relativement à ces zones de portée d'émission, de telle sorte que les zones de portée d'émission des points d'accès dudit plus petit nombre de points d'accès sélectionnés couvrent et atteignent l'ensemble des terminaux (T₁-T₉) à mettre à jour.

2. Procédé de gestion, selon la revendication 1, **caractérisé en ce que** l'étape (b) de sélection comprend la transmission d'un message de notification de la sélection à chaque point d'accès dudit ensemble de points d'accès (P₁-P₃) sélectionné, ledit message de notification comprenant ledit instant de début de diffusion.

3. Procédé de gestion, selon l'une quelconque des revendications précédentes, **caractérisé en ce que** lors de l'étape (a) de transmission dudit message de planification de réception desdites données de mise à jour, chaque terminal de ladite pluralité de terminaux de télé-relève (T₁-T₉) à mettre à jour émet un message d'acquittement à destination de son point d'accès associé, pour confirmer la planification de la réception desdites données de mise à jour audit instant de début de diffusion.

4. Procédé de gestion, selon l'une quelconque des revendications précédentes, **caractérisé en ce que** l'étape (c) d'émission desdites données de mise à jour par ledit ensemble de points d'accès sélectionné est effectuée plusieurs fois consécutives.

5. Procédé de gestion, selon la revendication 3, **caractérisé en ce que** l'étape (a) de transmission dudit message de planification de réception desdites données de mise à jour est effectuée, pour chaque terminal de télé-relève de ladite pluralité de terminaux de télé-relève (T₁-T₉) à mettre à jour, consécutivement à la réception, par son point d'accès associé, de données de télé-relève émises par ledit terminal de télé-relève.

6. Installation de télé-relève comprenant :
- Un serveur de gestion (1) ;
- Une pluralité de terminaux de télé-relève (T₁-T₉) à mettre à jour ;
- Une pluralité de points d'accès (P₁-P₃) ;
ladite pluralité de points d'accès (P₁-P₃) étant adaptée pour communiquer par liaison radiofréquence avec ladite pluralité de terminaux de télé-relève (T₁-T₉) à mettre à jour, et étant adaptée pour communiquer avec ledit serveur de gestion (1) de ladite installation de télé-relève par l'intermédiaire d'un réseau de télécommunication, chaque terminal de télé-relève de ladite pluralité de terminaux de télé-relève (T₁-T₉) à mettre à jour étant associé à un point d'accès de ladite pluralité de points d'accès (P₁-P₃) pour transmettre des données de télé-relève audit serveur de gestion (1), ledit serveur de gestion (1) étant adapté pour commander la transmission d'un message de planification de réception de données de mise à jour à ladite pluralité de terminaux de télé-relève (T₁-T₉) à mettre à jour, par l'intermédiaire de leurs points d'accès associés, ledit message de planification comprenant un instant de début de diffusion desdites données de mise à jour ;
ledit serveur de gestion (1) étant adapté pour sélectionner un ensemble de points d'accès parmi ladite pluralité de points d'accès (P₁-P₃) de manière à limiter le nombre de points d'accès utilisés pour diffuser lesdites données de mise à jour, tout en permettant la réception desdites données de mise à jour par ladite pluralité de terminaux de télé-relève (T₁-T₉) à mettre à jour ;
ledit ensemble de points d'accès sélectionné par ledit serveur de gestion (1) étant adapté pour émettre lesdites données de mise à jour audit instant de début de diffusion ;
ladite installation de télé-relève étant **caractérisé en ce que** ladite sélection dudit ensemble de points d'accès (P₁-P₃) comprend la sélection du plus petit nombre de points d'accès permettant d'émettre les mises à jour à tous les terminaux de télé-relève (T₁-T₉) à mettre à jour simultanément, en tenant compte d'une part, des zones de portée d'émission des points d'accès et, d'autre part, des emplacements des terminaux de télé-relève relativement à ces zones de portée d'émission, de telle sorte que les zones de portée d'émission (ZP1, ZP2, ZP3) des points d'accès (P₁-P₃) dudit plus petit nombre de points d'accès sélectionnés couvrent et atteignent l'ensemble des terminaux (T₁-T₉) à mettre à jour.

## Patentansprüche

1. Verfahren zur Verwaltung einer Softwareaktualisierung einer Vielzahl von zu aktualisierenden Fernableseendgeräten (T₁-T₉) in einer Fernableseanlage, die eine Vielzahl von Zugangspunkten (P₁-P₃) umfasst, wobei die Vielzahl von Zugangspunkten (P₁-P₃) dazu geeignet ist, über eine Funkfrequenzverbindung mit der Vielzahl von zu aktualisierenden Fernableseendgeräten (T₁-T₉) zu kommunizieren, und dazu geeignet ist, mit einem Verwaltungsserver (1) der Fernableseanlage über ein Telekommunikationsnetz zu kommunizieren, wobei jedes Fernableseendgerät (T₁-T₉) der Vielzahl von zu aktualisierenden Fernableseendgeräten (T₁-T₉) einem Zugangspunkt der Vielzahl von Zugangspunkten (P₁-P₃) zugeordnet ist, um Fernablesedaten an den Verwaltungsserver (1) zu übertragen, wobei das Verfahren die folgenden Schritte umfasst:
(a) Übertragen einer Nachricht zur Planung des Empfangens von Aktualisierungsdaten an die Vielzahl von zu aktualisierenden Fernableseendgeräten (T₁-T₉) über deren zugeordnete Zugangspunkte, wobei die Planungsnachricht einen Zeitpunkt des Beginns der Aussendung der Aktualisierungsdaten enthält;
(b) Auswählen einer Gruppe von Zugangspunkten unter der Vielzahl von Zugangspunkten (P₁-P₃), so dass die Anzahl der zum Aussenden der Aktualisierungsdaten verwendeten Zugangspunkte begrenzt wird und dennoch das Empfangen der Aktualisierungsdaten durch die Vielzahl von zu aktualisierenden Fernableseendgeräten (T₁-T₉) ermöglicht wird;
(c) Senden der Aktualisierungsdaten durch die ausgewählte Gruppe von Zugangspunkten zum Zeitpunkt des Beginns der Aussendung;
wobei das Verfahren **dadurch gekennzeichnet ist, dass** der Schritt (b) des Auswählens das Auswählen der geringsten Anzahl von Zugangspunkten umfasst, die es ermöglicht, die Aktualisierungen an alle zu aktualisierenden Fernableseendgeräte (T₁-T₉) gleichzeitig zu senden, unter Berücksichtigung einerseits der Sendereichweitenbereiche (ZP1, ZP2, ZP3) der Zugangspunkte (P₁-P₃) und andererseits der Standorte der Fernableseendgeräte in Bezug auf diese Sendereichweitenbereiche, so dass die Sendereichweitenbereiche der Zugangspunkte der geringsten Anzahl von ausgewählten Zugangspunkten alle zu aktualisierenden Endgeräte (T₁-T₉) abdecken und erreichen.

2. Verwaltungsverfahren nach Anspruch 1, **dadurch gekennzeichnet, dass** der Schritt (b) des Auswählens die Übertragung einer Nachricht zum Melden der Auswahl an jeden Zugangspunkt der ausgewählten Gruppe von Zugangspunkten (P₁-P₃) umfasst, wobei die Meldenachricht den Zeitpunkt des Beginns der Aussendung enthält.

3. Verwaltungsverfahren nach einem der vorhergehenden Ansprüche, **dadurch gekennzeichnet, dass** beim Schritt (a) des Übertragens der Nachricht zur Planung des Empfangens der Aktualisierungsdaten jedes Endgerät der Vielzahl von zu aktualisierenden Fernableseendgeräten (T₁-T₉) eine Quittierungsnachricht an seinen zugeordneten Zugangspunkt sendet, um die Planung des Empfangens der Aktualisierungsdaten zum Zeitpunkt des Beginns der Aussendung zu bestätigen.

4. Verwaltungsverfahren nach einem der vorhergehenden Ansprüche, **dadurch gekennzeichnet, dass** der Schritt (c) des Sendens der Aktualisierungsdaten durch die ausgewählte Gruppe von Zugangspunkten mehrmals nacheinander ausgeführt wird.

5. Verwaltungsverfahren nach Anspruch 3, **dadurch gekennzeichnet, dass** der Schritt (a) des Übertragens der Nachricht zur Planung des Empfangens der Aktualisierungsdaten für jedes Fernableseendgerät der Vielzahl von zu aktualisierenden Fernableseendgeräten (T₁-T₉) im Anschluss an das Empfangen von Fernablesedaten, die von dem Fernableseendgerät gesendet werden, durch dessen zugeordneten Zugangspunkt ausgeführt wird.

6. Fernableseanlage, umfassend:
- einen Verwaltungsserver (1);
- eine Vielzahl von zu aktualisierenden Fernableseendgeräten (T₁-T₉) ;
- eine Vielzahl von Zugangspunkten (P₁-P₃);
wobei die Vielzahl von Zugangspunkten (P₁-P₃) dazu geeignet ist, über eine Funkfrequenzverbindung mit der Vielzahl von zu aktualisierenden Fernableseendgeräten (T₁-T₉) zu kommunizieren, und dazu geeignet ist, mit dem Verwaltungsserver (1) der Fernableseanlage über ein Telekommunikationsnetz zu kommunizieren, wobei jedes Fernableseendgerät der Vielzahl von zu aktualisierenden Fernableseendgeräten (T₁-T₉) einem Zugangspunkt der Vielzahl von Zugangspunkten (P₁-P₃) zugeordnet ist, um Fernablesedaten an den Verwaltungsserver (1) zu übertragen, wobei der Verwaltungsserver (1) dazu geeignet ist, die Übertragung einer Nachricht zur Planung des Empfangens von Aktualisierungsdaten an die Vielzahl von zu aktualisierenden Fernableseendgeräten (T₁-T₉) über deren zugeordnete Zugangspunkte zu steuern, wobei die Planungsnachricht einen Zeitpunkt des Beginns der Aussendung der Aktualisierungsdaten enthält;
wobei der Verwaltungsserver (1) dazu geeignet ist, eine Gruppe von Zugangspunkten unter der Vielzahl von Zugangspunkten (P₁-P₃) auszuwählen, so dass die Anzahl der zum Aussenden der Aktualisierungsdaten verwendeten Zugangspunkte begrenzt wird und dennoch das Empfangen der Aktualisierungsdaten durch die Vielzahl von zu aktualisierenden Fernableseendgeräten (T₁-T₉) ermöglicht wird;
wobei die vom Verwaltungsserver (1) ausgewählte Gruppe von Zugangspunkten dazu geeignet ist, die Aktualisierungsdaten zum Zeitpunkt des Beginns der Aussendung zu senden;
wobei die Fernableseanlage **dadurch gekennzeichnet ist, dass** das Auswählen der Gruppe von Zugangspunkten (P₁-P₃) das Auswählen der geringsten Anzahl von Zugangspunkten umfasst, die es ermöglicht, die Aktualisierungen an alle zu aktualisierenden Fernableseendgeräte (T₁-T₉) gleichzeitig zu senden, unter Berücksichtigung einerseits der Sendereichweitenbereiche der Zugangspunkte und andererseits der Standorte der Fernableseendgeräte in Bezug auf diese Sendereichweitenbereiche, so dass die Sendereichweitenbereiche (ZP1, ZP2, ZP3) der Zugangspunkte (P₁-P₃) der geringsten Anzahl von ausgewählten Zugangspunkten alle zu aktualisierenden Endgeräte (T₁-T₉) abdecken und erreichen.

## Claims

1. A method of managing a software update of a plurality of remote-reading terminals (T₁-T₉) to be updated in a remote-reading installation comprising a plurality of access points (P₁-P₃), said plurality of access points (P₁-P₃) being designed for communicating by radio link with said plurality of remote-reading terminals (T₁-T₉) to be updated, and being designed for communicating with a management server (1) of said remote-reading installation by the intermediary of a telecommunication network, each remote-reading terminal (T₁-T₉) of said plurality of remote-reading terminals (T₁-T₉) to be updated being associated with an access point access point of said plurality of access points (P₁-P₃) in order to transmit remote-reading data to said management server (1), the method comprising the steps of:
(a) transmitting a message for planning reception of update data to said plurality of remote-reading terminals (T₁-T₉) to be updated by the intermediary of their associated access points, said planning message comprising a start time for the distribution of said update data;
(b) selecting a set of access points among said plurality of access points (P₁-P₃) in such a way as to limit the number of access points used for distributing said update data, whilst allowing the reception of said update data by said plurality of remote-reading terminals (T₁-T₉) to be updated;
(c) transmitting said update data by said selected set of access points, at said distribution start time;
the method being **characterized in that** the selection step (b) comprises the selection of the smallest number of access points making it possible to transmit the updates to all of the remote-reading terminals (T₁-T₉) to be updated simultaneously, taking account, on the one hand, of the transmission range areas (Z_{P1}, Z_{P2}, Z_{P3}) of the access points (P₁-P₃) and, on the other hand, of the locations of the remote-reading terminals relative to these transmission range areas, so the transmission range areas (Z_{P1} Z_{P2}, Z_{P3}) make it possible to cover and reach all of the remote-reading terminals (T₁-T₉) to be updated.

2. The management method as claimed in claim 1, **characterized in that** the selection step (b) comprises the transmission of a message of notification of the selection to each access point of said selected set of access points (P₁-P₃), said notification message comprising said distribution start time.

3. The management method as claimed in any one of the preceding claims, **characterized in that** during the step (a) of transmission of said message for planning the reception of said update data, each terminal of said plurality of remote-reading terminals (T₁-T₉) to be updated transmits an acknowledgement message to its associated access point, in order to confirm the planning of the reception of said update data at said distribution start time.

4. The management method as claimed in any one of the preceding claims, **characterized in that** the step (c) of transmission of said update data by said selected set of access points is carried out several times consecutively.

5. The management method as claimed in claim 3, **characterized in that** the step (a) of transmission of said message for planning the reception of said update data is carried out, for each remote-reading terminal of said plurality of remote-reading terminals (T₁-T₉) to be updated, consecutive to the reception, by its associated access point, of remote-reading data transmitted by said remote-reading terminal.

6. A remote-reading installation comprising:
- a management server (1);
- a plurality of remote-reading terminals (T₁-T₉) to be updated;
- a plurality of access points (P₁-P₃);
said plurality of access points (P₁-P₃) being designed for communicating by radio link with said plurality of remote-reading terminals (T₁-T₉) to be updated, and being designed for communicating with said management server (1) of said remote-reading installation by the intermediary of a telecommunication network, each remote-reading terminal of said plurality of remote-reading terminals (T₁-T₉) to be updated being associated with an access point of said plurality of access points (P₁-P₃) for transmitting remote-reading data to the management server (1),
said management server (1) being designed for controlling the transmission of a message for planning the reception of update data to said plurality of remote-reading terminals (T₁-T₉) to be updated, by the intermediary of their associated access points, said planning message comprising an update data transmission start time;
said management server (1) being designed for selecting a set of access points from among said plurality of access points (P₁-P₃) in such a way as to limit the number of access points used for distributing said update data, whilst allowing the reception of said update data by said plurality of remote-reading terminals (T₁-T₉) to be updated;
said set of access points selected by the management server (1) being designed for transmitting said update data at said distribution start time; said remote-reading installation being **characterized in that** the selection of the set of access points from among said plurality of access points (P₁-P₃) comprises the selection of the smallest number of access points making it possible to transmit the updates to all of the remote-reading terminals (T₁-T₉) to be updated simultaneously, taking account, on the one hand, of the transmission range areas (Z_{P1}, Z_{P2}, Z_{P3}) of the access points (P₁-P₃) and, on the other hand, of the locations of the remote-reading terminals relative to these transmission range areas, so the transmission range areas (Z_{P1} Z_{P2}, Z_{P3}) make it possible to cover and reach all of the remote-reading terminals (T₁-T₉) to be updated.
